# EUROPÄISCHE PATENTSCHRIFT

(11) **EP 3 571 365 B1**
(45) Veröffentlichungstag und Bekanntmachung des Hinweises auf die Patenterteilung: **01.07.2020**
(21) Anmeldenummer: 18701658.9
(22) Anmeldetag: 18.01.2018
(51) Int. Cl.: E05B 63/12, E05B 83/40, E05B 65/08

(54) **VERRIEGELUNGSVORRICHTUNG UND SCHIEBETÜR MIT VERRIEGELUNGSVORRICHTUNG**
LOCKING DEVICE AND SLIDING DOOR WITH LOCKING DEVICE
DISPOSITIF DE VERROUILLAGE ET PORTE COULISSANTE À DISPOSITIF DE VERROUILLAGE

(30) Priorität: 18.01.2017 AT 500312017
(43) Veröffentlichungstag der Anmeldung: 27.11.2019
(73) Patentinhaber: FACC AG, 4910 Ried im Innkreis (AT)
(72) Erfinder: KONRAD, Wilfried, 4910 Ried im Innkreis (AT)
(74) Vertreter: Sonn & Partner Patentanwälte
(86) Internationale Anmeldenummer: PCT/AT2018/060013
(87) Internationale Veröffentlichungsnummer: WO 2018/132856

(56) Entgegenhaltungen:
- WO-A1-2014/089943
- DE-A1- 3 905 353
- DE-U1-202011 102 487
- US-B1- 6 415 476

## Beschreibung

Die Erfindung betrifft eine Verriegelungsvorrichtung zur Verriegelung eines ersten Bauteils, insbesondere eines Türblatts, an einem zweiten Bauteil, insbesondere an einem Türrahmen, mit einem Fangelement zur Befestigung am ersten oder zweiten Bauteil, wobei das Fangelement eine erste Rastausnehmung aufweist, mit einer Rasteinheit zur Befestigung am zweiten bzw. ersten Bauteil, wobei die Rasteinheit einen ersten Rastkörper zur Verrastung mit der zumindest einen Rastausnehmung des Fangelements aufweist und, wobei die Rasteinheit ein Auslöseelement aufweist, welches eine erste Aufnahmeöffnung zur Aufnahme des ersten Rastkörpers aufweist, wobei das Auslöseelement zwischen einer den ersten Rastkörper in der ersten Rastausnehmung des Fangelements und in der Aufnahmeöffnung des Auslöseelements anordnenden Ruheposition und einer die Verrastung zwischen dem ersten Rastkörper und der ersten Rastausnehmung des Fangelements lösenden Auslöseposition beweglich ist.

Weiters betrifft die Erfindung eine Schiebetür, insbesondere für ein Flugzeug, mit einem Türrahmen, mit einem zwischen einer Offenstellung und einer Schließstellung gegenüber dem Türrahmen verschieblichen Türblatt und mit einer Verriegelungsvorrichtung zur Verriegelung des Türblatts an dem Türrahmen.

Im Stand der Technik sind verschiedenste Verriegelungsvorrichtungen bekannt, welche unter anderem auch bei Schiebetüren verwendet werden, um die Schiebetür in der Schließstellung zu fixieren.

Bei Schiebetüren in Flugzeugen wird vielfach ein Betätigungsmechanismus zur Freigabe des Schließvorgangs vorgesehen. Der Betätigungsmechanismus weist typischerweise einen Handgriff auf, welcher benachbart einer Zugangsöffnung der Schiebetür an einer Rahmenstruktur angeordnet ist. Durch Betätigung des Handgriffs wird ein Rastmechanismus ausgelöst, mit welchem die Schiebetür in der Offenstellung fixiert wird. Beim Stand der Technik weist der Rastmechanismus eine an der Rahmenstruktur angebrachte Rasteinheit mit gegeneinander verschwenkbaren Rasthaken auf, welche eine Rastaufnahme für ein entsprechendes Rastelement an der Schiebetür bilden. Beim Erreichen der Offenstellung der Schiebetür wird das Rastelement der Schiebetür in der Rastaufnahme der Rasteinheit verrastet. Zur Einleitung des Schließvorgangs wird der Handgriff betätigt, wodurch die Rasthaken gegen die Federkraft nach außen verschwenkt werden, so dass der Rasteingriff gelöst wird. Bei gelöster Rastverbindung kann die Schiebetür insbesondere unter der Wirkung eines Antriebselements in die Schließstellung überführt werden.

Nachteilig an dem bekannten Rastmechanismus ist einerseits die mit der Bedienung einhergehende Geräuschentwicklung, welche von den Benutzern der Schiebetür als störend empfunden werden kann. Weiters verlangt der bekannte Rastmechanismus vergleichsweise hohe Bedienkräfte, welche die Betätigung der Schiebetür erschweren. Zudem ist es wünschenswert, das Einbauvolumen des Rastmechanismus zu reduzieren. Weiters wird insbesondere in der Flugzeugtechnik eine Gewichtsreduktion angestrebt. Schließlich ist auch die Zuverlässigkeit im Dauereinsatz verbesserungswürdig.

Aus der US 2013/149029 A1 ist ein andersartiges Verriegelungssystem bekannt, welches u.a. für Türen vorgesehen ist. Bei diesem Verriegelungssystem wird ein Stift in ein Gehäuse eingeführt. Dabei können zwei Verriegelungspositionen durch das Verrasten von zwei gegenüberliegenden Ringfedern in dafür vorgesehenen Kerben am Stift und am Gehäuse eingenommen werden, wenn der Stift in die eine Richtung in das Gehäuse geschoben wird. In die andere Richtung kann der Stift nur zurückbewegt werden, wenn die Ringfedern durch Anordnung des Stiftes in der zweiten Verriegelungsposition in ihre Ausgangslage gedreht werden, woraufhin der Stift mit Unterstützung einer Kraft (z.B. Magnetismus) aus dem Gehäuse entfernt werden kann.

Aus der WO 2014/089943 A1 ist ein Schließmechanismus mit einem Gehäuse, einem Schieber, einer Kugel und einem Befestigungselement bekannt. Zur Verriegelung wird das Befestigungselement in das Gehäuse eingeführt und der Schieber nach oben geschoben, wodurch die Kugel in eine Öffnung des Befestigungselements und gleichzeitig in eine Vertiefung des Schiebers gedrückt wird. Zum Lösen wird der Schieber nach unten gezogen, wodurch die Kugel aus der Öffnung herausgleitet und dadurch das Befestigungselement freigibt.

Die US 6,415,476 B1 offenbart einen Verriegelungsmechanismus mit einem Gehäuse, in welchem ein Befestigungsstift mit zwei Einkerbungen, zwei Kugeln und zwei Haltestifte angeordnet sind. In einer Befestigungsstellung sind die Kugeln in die Einkerbungen des Befestigungsstiftes eingefügt und werden durch die beiden Haltestifte fixiert, sodass der Befestigungsstift nicht aus dem Gehäuse herausgezogen werden kann. Zum Freigeben des Befestigungsstiftes werden die Haltestifte aus dem Gehäuse herausgezogen, wodurch die Kugeln aus den Einkerbungen herausgleiten und den Befestigungsstift freigeben.

Weiters ist aus der DE 39 05 353 A1 ein Verriegelungsmechanismus mit einem Schließteil bekannt, welcher in eine Zentrieröffnung eines Schlosselements eingefügt werden kann. Der Schließteil wird in einer Befestigungsstellung durch Sperrglieder fixiert. Die Sperrglieder werden dabei von Sicherungselementen und Federringen gehalten. Zum Lösen des Verriegelungsmechanismus muss eine Verrieglungsbuchse verdreht werden.

Daneben ist aus der DE 20 2011 102 487 U1 ein Sicherheitsschwenkmechanismus bekannt.

Auch dieser Stand der Technik kann die zuvor geschilderten Probleme der vor allem bei Flugzeug-Schiebetüren eingesetzten Rastmechanismen nicht zufriedenstellend lösen.

Demnach besteht die Aufgabe der Erfindung darin, zumindest einzelne Nachteile des eingangs geschilderten Standes der Technik zu lindern bzw. zu beseitigen. Die Erfindung setzt sich daher insbesondere zum Ziel, die bekannten Verriegelungsvorrichtungen dahingehend zu verbessern, dass eine Gewichtsersparnis erzielt, der Platzbedarf für den Einbau der Verriegelungsvorrichtung reduziert, die Bedienkräfte in Gebrauch verringert und/oder eine leisere Betätigung ermöglicht werden.

Diese Aufgabe wird durch eine Verriegelungsvorrichtung nach Anspruch 1 und eine Schiebetür nach Anspruch 11 gelöst. Bevorzugte Ausführungsformen der Erfindung sind in den abhängigen Ansprüchen angegeben.

Bei der erfindungsgemäßen Verriegelungsvorrichtung ist ein eigenes Auslöseelement vorgesehen, in dessen Aufnahmeöffnung der erste Rastkörper aufgenommen ist, wenn das Fangelement und der erste Rastkörper im verrasteten Zustand angeordnet sind. Durch die Bewegung, insbesondere Verschiebung, des Auslöseelements wird der erste Rastkörper entlang einer Begrenzungsfläche der Aufnahmeöffnung des Auslöseelements derart geführt, dass der erste Rastkörper aus der ersten Rastausnehmung des Fangelements gedrückt wird. Dadurch werden das Fangelement und der erste Rastkörper im entrasteten Zustand angeordnet, so dass die Bewegung des Fangelements relativ zur Rasteinheit in Richtung entgegen der Einschubrichtung des Fangelements beim Einführen in die Rasteinheit freigegeben wird.Die erste Rastausnehmung des Fangelements (Fängers) und die erste Aufnahmeöffnung des Auslöseelements (Auslösers) sind bevorzugt jeweils als Kerbe an einem Längsrand des Fängers bzw. des Auslöseelements ausgebildet. Es ist daher nicht nötig, den Fänger am beweglichen Bauteil durch Verschwenkung von Rasthaken am stationären Bauteil freizugeben. Das Fangelement kann hingegen durch Betätigung des separat von dem ersten Rastkörper bzw. von dem Fangelement vorliegenden Auslöseelements freigegeben werden, in dessen erster Aufnahmeöffnung der erste Rastkörper im verrasteten Zustand angeordnet ist. Das Auslöseelement ist bevorzugt mit einem Betätigungselement verbunden, welches die Betätigung des Auslöseelements durch einen Benutzer der Verriegelungsvorrichtung ermöglicht. Als Betätigungselement kann beispielsweise ein Druckknopf oder ein Schieber vorgesehen sein.Das Betätigungselement ist auf geeignete Weise, beispielsweise über eine elektromagnetische oder mechanische Kopplungseinrichtung, mit dem Auslöseelement verbunden. Durch diese Bauweise kann eine Verriegelungsvorrichtung geschaffen werden, welche sich durch geringes Gewicht, kompakte Bauweise und ebenso leise wie leichtgängige Bedienung auszeichnet. Vorteilhaft ist insbesondere auch, dass die Auslösekraft gegenüber dem Stand der Technik gesenkt werden kann. Dadurch werden geringere Anforderungen an die Auslösung der Verriegelungsvorrichtung, insbesondere an die Kopplungseinrichtung zwischen dem Betätigungselement und dem Auslöseelement, gestellt.

Erfindungsgemäß ist das Fangelement als längliches Flachteil ausgebildet, wobei die erste Rastausnehmung an einem ersten Längsrand des länglichen Flachteils vorgesehen ist.

Bei der erfindungsgemäßen Verriegelungsvorrichtung weist das Fangelement eine Hauptebene auf, entlang welcher das Fangelement eine um ein Mehrfaches größere Ausdehnung als entlang einer Querschnittsfläche senkrecht dazu aufweist. Demnach ist das Fangelement erfindungsgemäß im Wesentlichen plattenförmig. Die Hauptebene des Fangelements erstreckt sich im montierten Zustand vorzugsweise im Wesentlichen parallel zu einer Türebene des ersten bzw. zweiten Bauteils. Das längliche Fangelement ist bevorzugt in Richtung der Verschiebung des Fangelements langgestreckt. Erfindungsgemäß kann dadurch eine besonders flache und leichte Verriegelungsvorrichtung erzielt werden, welche sich insbesondere für die beengten Raumverhältnisse bei einer Flugzeugtür eignet.

Zur einfachen, zuverlässigen Entrastung der Verriegelungsvorrichtung ist es günstig, wenn die Rasteinheit eine erste Linearführung zur verschieblichen Lagerung des Auslöseelements zwischen der Ruheposition und der Auslöseposition aufweist. Bei dieser Ausführung ist das Auslöseelement zwischen der Ruhe- und der Auslöseposition entlang einer im Wesentlichen geradlinigen Führungsstrecke verschieblich an der Rasteinheit gelagert. Bevorzugt erstreckt sich die erste Linearführung der Rasteinheit im Wesentlichen parallel zur Führungsbahn des Fangelements relativ zur Rasteinheit. Die Rasteinheit kann einen ersten Anschlag zur Festlegung der Ruheposition und einen zweiten Anschlag zur Festlegung der Auslöseposition aufweisen. In Gebrauch kann das Auslöseelement im verrasteten Zustand zwischen dem ersten Rastkörper und dem Fangelement betätigt werden, um den ersten Rastkörper aus der ersten Rastausnehmung des Fangelements herauszuführen. Dadurch wird der Rasteingriff zwischen dem ersten Rastkörper und dem Fangelement gelöst, so dass eine (zusätzliche) Beweglichkeit des Fangelements relativ zur Rasteinheit freigegeben ist.

Diese Ausführung bringt insbesondere auch den Vorteil mit sich, dass die Verriegelungsvorrichtung auf besonders einfache Weise an verschiedene Betätigungsarten angepasst werden kann. In einer bevorzugten Ausführung ist das Auslöseelement im Wesentlichen in Richtung der Bewegung des Fangelements bei der Verrastung mit der Rasteinheit verschieblich. Diese Ausführung ermöglicht daher eine Entrastung der Verriegelungsvorrichtung durch Aufbringung einer Zugkraft auf das Auslöseelement, wodurch das Auslöseelement weg vom Zentrum der Rasteinheit verschoben wird. In einer alternativen bevorzugten Ausführung ist das Auslöseelement im Wesentlichen entgegen der Richtung der Bewegung des Fangelements bei der Verrastung mit der Rasteinheit verschieblich. Bei dieser Ausführung kann das Auslöseelement zur Entrastung der Verriegelungsvorrichtung in Richtung des Zentrums der Rasteinheit gedrückt werden. Die Ausgestaltung der Verriegelungsvorrichtung ermöglicht es daher, die Erfordernisse der jeweiligen Anwendung mit geringen baulichen Änderungen zu berücksichtigen.

Um das Fangelement und die Rasteinheit präzise und zuverlässig in den verrasteten Zustand zu bringen, ist es günstig, wenn die Rasteinheit eine zweite Linearführung zur verschieblichen Lagerung des ersten Rastkörpers zwischen einer mit der ersten Rastausnehmung des Fangelements verrasteten ersten Position und einer das Fangelement freigebenden zweiten Position aufweist, wobei sich die zweite Linearführung vorzugsweise im Wesentlichen senkrecht zur ersten Linearführung erstreckt. Durch Betätigung des Auslöseelements kann der erste Rastkörper entlang der zweiten Linearführung sowohl aus der ersten Rastausnehmung des Fangelements als auch aus der ersten Aufnahmeöffnung des Auslöseelements gedrückt werden, wodurch das Fangelement und die Rasteinheit in den entrasteten Zustand überführt werden. Die Anordnung der zweiten Linearführung im Wesentlichen senkrecht zur ersten Linearführung geht mit einer kompakten Bauweise einher, bei der Verrastung und Entrastung über vergleichsweise kurze Verschiebungen des ersten Rastkörpers bewirkt werden können.

Zur Verrastung des Fangelements mit der Rasteinheit ist es insbesondere günstig, wenn die Rasteinheit ein erstes Federelement aufweist, wobei der erste Rastkörper gegen die Federkraft des ersten Federelements von der mit der ersten Rastausnehmung des Fangelements verrasteten ersten Position in die das Fangelement freigebende zweite Position verschieblich ist. Demnach drückt das erste Federelement den ersten Rastkörper in Richtung der ersten Position innerhalb der ersten Rastausnehmung des Fangelements. Bevorzugt weist das Fangelement an einem der Rasteinheit zugewandten Ende eine insbesondere schräg zur Bewegungsrichtung des Fangelements verlaufende Auflauffläche auf, welche den ersten Rastkörper in Richtung der zweiten Position drücken kann, bevor der erste Rastkörper in die erste Rastausnehmung des Fangelements einrastet.

Zur Erzielung einer besonders kompakten Bauweise ist das Fangelement als längliches Flachteil ausgebildet, wobei die erste Rastausnehmung an einem ersten Längsrand des länglichen Flachteils vorgesehen ist. Bei dieser Ausführung weist das Fangelement eine Hauptebene auf, entlang welcher das Fangelement eine um ein Mehrfaches größere Ausdehnung als entlang einer Querschnittsfläche senkrecht dazu aufweist. Demnach ist das Fangelement bei dieser Ausführungsform im Wesentlichen plattenförmig. Die Hauptebene des Fangelements erstreckt sich im montierten Zustand vorzugsweise im Wesentlichen parallel zu einer Türebene des ersten bzw. zweiten Bauteils. Das längliche Fangelement ist bevorzugt in Richtung der Verschiebung des Fangelements langgestreckt. Vorteilhafterweise kann dadurch eine besonders flache und leichte Verriegelungsvorrichtung erzielt werden, welche sich insbesondere für die beengten Raumverhältnisse bei einer Flugzeugtür eignet.

Aus den zuvor genannten Gründen ist es zudem vorteilhaft, wenn das Auslöseelement als langgestrecktes Flachstück ausgebildet ist, wobei die erste Aufnahmeöffnung an einem ersten Längsrand des langgestreckten Flachstücks vorgesehen ist. Bei dieser Ausführung weist das Auslöseelement eine Hauptebene auf, entlang welcher das Fangelement eine um ein Mehrfaches größere Ausdehnung als entlang einer Querschnittsfläche senkrecht dazu aufweist. Demnach ist das Auslöseelement bei dieser Ausführungsform im Wesentlichen plattenförmig. Die Hauptebene des Auslöseelements erstreckt sich im montierten Zustand vorzugsweise im Wesentlichen parallel zu einer Türebene des ersten bzw. zweiten Bauteils. Das Auslöseelement ist bevorzugt in Richtung der Verschiebung entlang der ersten Linearführung langgestreckt.

Besonders hohe Rastkräfte können erzielt werden, wenn die Rasteinheit einen zweiten Rastkörper zur Verrastung mit einer zweiten Rastausnehmung des Fangelements und zur Aufnahme in einer zweiten Aufnahmeöffnung des Auslöseelements aufweist, wobei die zweite Rastausnehmung des Fangelements an einem zweiten Längsrand des Fangelements und die zweite Aufnahmeöffnung des Auslöseelements an einem zweiten Längsrand des Auslöseelements vorgesehen ist. Der erste und zweite Rastkörper sind vorzugsweise im Wesentlichen ident ausgebildet.

Die zuvor beschriebene Verriegelungsvorrichtung lässt sich auf einfache Weise an unterschiedliche Anwendungen anpassen.

In einer ersten bevorzugten Ausführungsform ist das Fangelement im verrasteten Zustand zwischen dem ersten Rastkörper und der ersten Rastausnehmung des Fangelements im Wesentlichen unbeweglich an der Rasteinheit fixiert. Bei dieser Ausführungsform ist die Beweglichkeit des Fangelements relativ zur Rasteinheit im verrasteten Zustand in Einschubrichtung und entgegen der Einschubrichtung des Fangelements in die Rasteinheit gesperrt.

In einer zweiten bevorzugten Ausführungsform weist die erste Rastausnehmung des Fangelements eine erste Sperrfläche und eine zweite Sperrfläche derart auf, dass das Fangelement im verrasteten Zustand zwischen dem ersten Rastkörper und der ersten Rastausnehmung des Fangelements über eine definierte Strecke beweglich an der Rasteinheit angeordnet ist. Bei dieser Ausführung ist die erste Rastausnehmung an den gegenüberliegenden Seiten durch die erste und die zweite Sperrfläche begrenzt, welche in einem solchen Abstand zueinander angeordnet sind, dass der erste Rastkörper durch Verschiebung des Fangelements über die vorgegebene Strecke einerseits an der ersten Sperrfläche und andererseits an der zweiten Sperrfläche angeschlagen werden kann. Die erste und die zweite Sperrfläche sind derart ausgebildet, dass das Fangelement ohne Betätigung des Auslöseelements nicht über die erste bzw. über die zweite Sperrfläche hinaus verschoben werden kann. Diese Ausführung ermöglicht es, im eingebauten Zustand der Verriegelungsvorrichtung einen Toleranzausgleich vorzunehmen.

In einer dritten bevorzugten Ausführung ist das Fangelement im verrasteten Zustand zwischen dem ersten Rastkörper und der ersten Rastausnehmung des Fangelements in die eine Richtung verschieblich an der Rasteinheit und in die andere Richtung im Wesentlichen unverschieblich an der Rasteinheit angeordnet. Bei dieser Ausführung kann die Rastausnehmung des Fangelements am vorderen Ende (bezogen auf die Einschubrichtung des Fangelements in die Rasteinheit) eine Sperr- bzw. Haltefläche und am hinteren Ende eine Auflauffläche aufweist. Die Haltefläche ist derart ausgebildet, insbesondere derart geneigt, dass das Fangelement im verrasteten Zustand (bei typischen Gebrauchskräften) gegen eine Verschiebung entgegen der Einschubrichtung des Fangelements gesichert ist. Demgegenüber ist die Auflauffläche der Rastausnehmung derart ausgebildet, insbesondere geneigt, dass eine weitere Verschiebung im verrasteten Zustand in Einschubrichtung des Fangelements freigegeben ist. Bei dieser Ausführung kann ein Anschlagelement außerhalb der Rasteinheit vorgesehen sein, welches die Endposition des Fangelements in Einschubrichtung festlegt. Dadurch können Toleranzen im eingebauten Zustand berücksichtigt werden.

Als erster und/oder zweiter Rastkörper ist bevorzugt ein Zylinderelement vorgesehen.

Gemäß einer besonders bevorzugten Anwendung ist die zuvor beschriebene Verriegelungsvorrichtung bei einer Schiebetür, insbesondere in einem Flugzeug, vorgesehen. Hierbei können die Vorteile der Verriegelungsvorrichtung hinsichtlich Gewicht, Baugröße, Zuverlässigkeit im Dauerbetrieb und Bedienkraft optimal genutzt werden.

In einer bevorzugten Ausführung ist die Verriegelungsvorrichtung zur Verriegelung des Türblatts in der Schließstellung ausgebildet, wobei eine weitere Verriegelungsvorrichtung, wie zuvor beschrieben, zur Verriegelung des Türblatts in der Offenstellung vorgesehen ist. Demnach können zwei gleichartige Verriegelungsvorrichtungen vorgesehen sein, welche eine Verriegelung der Schiebetür in der Schließ- und in der Offenstellung ermöglichen.

Gemäß einer besonders bevorzugten Ausführung weist das Türblatt ein Türoberteil und ein Türunterteil auf, die in der Schließstellung des Türblatts in einer ausgezogenen Position und in der Offenstellung in einer zusammengeschobenen Stauposition angeordnet sind. Eine solche Schiebetür wird als verstaubare Schiebetür (engl. "Pocket door") bezeichnet. Aufgrund dieser Ausgestaltung kann die Schiebetür in einem dafür vorgesehenen Abteil verstaut werden, wenn die Schiebetür vollständig geöffnet ist. Derartige Schiebetüren sind an sich bekannt, siehe etwa die DE 20 2011 102 487 U1 und DE 20 2011 102 484 U1. Bei dieser Ausführung sind das Türoberteil und das Türunterteil in Richtung im Wesentlichen senkrecht zur Öffnungsrichtung der Schiebetür (d.h. im Wesentlichen senkrecht zum Flugzeugboden) ineinander zusammenschiebbar, damit das Türblatt in der Offenstellung auf besonders kompakte Weise verstaut werden kann.

Um das Türblatt beim Öffnen der Schiebetür in die kompakte Stauposition zu bringen, weist der Türrahmen bevorzugt eine in einem Neigungswinkel zur Horizontalen verlaufende Führungsschiene zur verschieblichen Lagerung des Türblatts auf, so dass die Verschiebung des Türblatts zwischen der Schließ- und der Offenstellung in eine Verschiebung des Türoberteils und des Türunterteils gegeneinander zwischen der ausgezogenen Position und der zusammengeschobenen Stauposition umsetzbar ist. Für die Zwecke der vorliegenden Offenbarung beziehen sich die Orts- und Richtungsangaben bei dieser Ausführung auf den montierten Betriebszustand der Schiebetür in horizontaler Position des Flugzeugs.

Die Erfindung wird nachstehend anhand von bevorzugten Ausführungsbeispielen, auf die sie jedoch nicht beschränkt sein soll, weiter erläutert.
Fig. 1a zeigt eine verstaubare Schiebetür in deren Schließstellung, wobei je eine erfindungsgemäße Verriegelungsvorrichtung zur Verriegelung der Schiebetür in der Schließstellung (Fig. 1a) und in der Offenstellung (Fig. 2a) vorgesehen sind;
Fig. 1b zeigt das in Fig. 1a hervorgehobene Detail A;
Fig. 1c zeigt das in Fig. 1a hervorgehobene Detail B;
Fig. 2a zeigt die verstaubare Schiebetür gemäß Fig. 1a bis 1c in deren Offenstellung;
Fig. 2b zeigt das in Fig. 2a hervorgehobene Detail A;
Fig. 2c zeigt das in Fig. 2a hervorgehobene Detail B;
Fig. 3 bis 6 zeigen mehrere Ansichten der Verriegelungsvorrichtung gemäß Fig. 1a, 2a während der Verrastung eines beweglichen Fangelements am Türblatt mit einer stationären Rasteinheit am Türrahmen;
Fig. 7 zeigt eine Ansicht der Verriegelungseinrichtung nach der Entrastung durch ein Auslöseelement, welches verschieblich an der Rasteinheit gelagert ist;
Fig. 8 zeigt eine Ansicht einer Ausführungsform der Verriegelungsvorrichtung, welche durch Aufbringung einer Zugkraft am Auslöseelement entrastet werden kann;
Fig. 9 zeigt eine Ansicht einer weiteren Ausführungsform der Verriegelungsvorrichtung, welche durch Aufbringung einer Drucckraft auf das Auslöseelement entrastet werden kann;
Fig. 10 zeigt eine Ansicht einer weiteren Ausführungsform der Verriegelungsvorrichtung, bei welcher das Fangelement im verrasteten Zustand unbeweglich an der Rasteinheit angeordnet ist;
Fig. 11, 12 zeigen Ansichten einer weiteren Ausführungsform der Verriegelungsvorrichtung, bei welcher das Fangelement im verrasteten Zustand über eine definierte Strecke verschieblich an der Rasteinheit angeordnet ist; und
Fig. 13 zeigt eine Ansicht einer weiteren Ausführungsform der Verriegelungsvorrichtung, bei welcher das Fangelement im verrasteten Zustand entgegen der Einschubrichtung des Fangelements unverschieblich, aber in Einschubrichtung des Fangelements verschieblich an der Rasteinheit angeordnet ist.

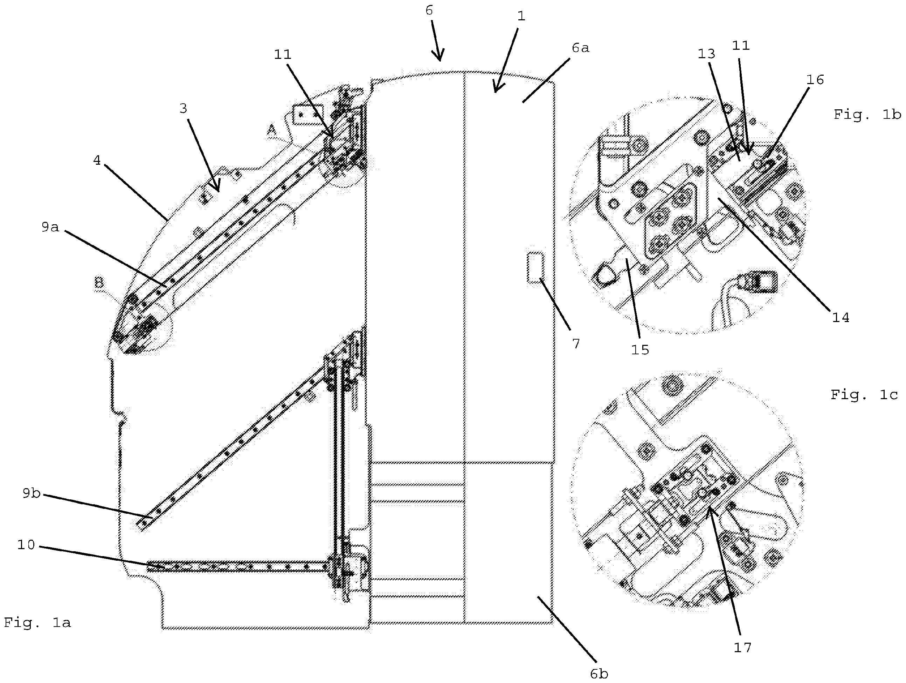

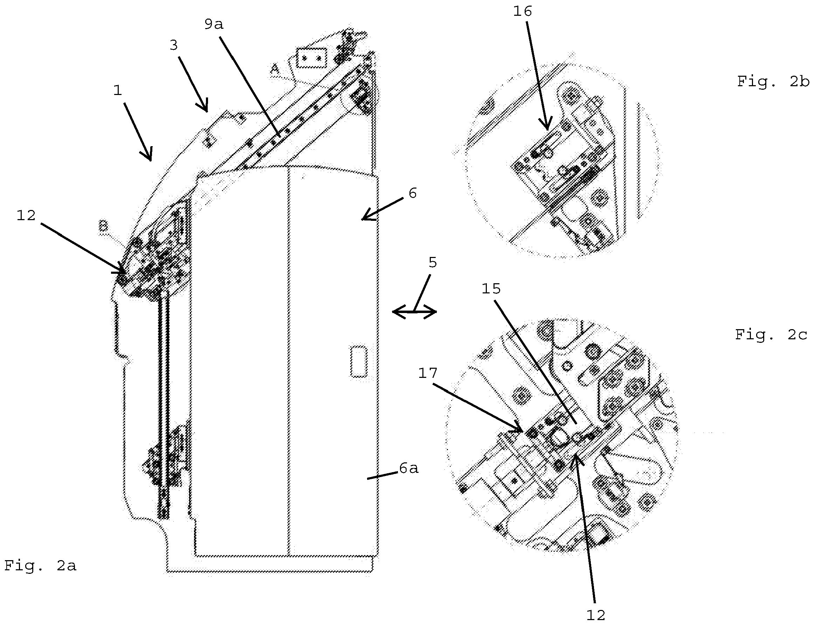

In Fig. 1a, 2a ist eine verstaubare Schiebetür 1 gezeigt, welche in der gezeigten Ausführung im Passagierraum eines Flugzeugs zum Einsatz kommt. Die Schiebetür 1 dient zum Verschließen einer Zugangsöffnung 2 (siehe Fig. 2a) innerhalb eines stationären Türrahmens 3, welcher beispielsweise als Zwischenwand des Flugzeugs ausgebildet ist. Der Türrahmen 3 weist eine Umrandung 4 auf, welche in der gezeigten Ausführung entsprechend der inneren Kontur des Flugzeugrumpfes gekrümmt ist. Somit steht neben der Zugangsöffnung 2 lediglich ein reduzierter Stauraum zur Verfügung, welcher eine Anpassung der Schiebetür 1 erfordert, um zu verhindern, dass die Schiebetür 1 beim Öffnungsvorgang durch die gekrümmte Umrandung 4 der Rahmenstruktur 3 blockiert wird.

Wie aus Fig. 1a, 2a ersichtlich, ist die Schiebetür 1 zwischen der in Fig. 1a gezeigten Schließstellung, in welcher die Zugangsöffnung 2 verschlossen ist, und der in Fig. 2a gezeigten Offenstellung, in welcher die Zugangsöffnung 2 freiliegt, in horizontaler Richtung 5 (vgl. Fig. 2a) verschiebbar. Die Schiebetür 1 weist ein Türoberteil 6a und ein Türunterteil 6b auf, welche zusammen ein Türblatt 6 bilden. In der Schließstellung der Schiebetür 1 (vgl. Fig. 1a) sind das Türoberteil 6a und das Türunterteil 6b in einer ausgezogenen Position angeordnet, in welcher das Türblatt 6 die Zugangsöffnung 2 vollständig ausfüllt.

Um die Schiebetür 1 platzsparend neben der Zugangsöffnung 2 verstauen zu können, werden das Türoberteil 6a und das Türunterteil 6b senkrecht zur Richtung 5 der Öffnungsbewegung zusammengeschoben, wenn die Schiebetür 1 mittels eines Handgriffs 7 geöffnet wird.

Solche verstaubaren Schiebetüren 1 sind im Stand der Technik an sich hinlänglich bekannt, wobei verschiedene Verstaumechanismen vorgeschlagen wurden. Nachstehend wird lediglich eine beispielhafte Ausgestaltung kurz erläutert.

Das Türoberteil 6a wird in der gezeigten Ausführung nach unten und das Türunterteil 6b im Wesentlichen in horizontaler Richtung verschoben, so dass das Türoberteil 6a beim Öffnen der Schiebetür 1 zunehmend mit dem Türunterteil 6b überlappt. Bei Erreichen der Offenstellung der Schiebetür 1 (vgl. Fig. 2a) sind die Unterkanten von Türoberteil 6a und Türunterteil 6b im Wesentlichen auf gleicher Höhe angeordnet, so dass die Gesamthöhe der Schiebetür 1 in der zusammengeschobenen Stauposition im Wesentlichen der Höhe des Türoberteils 6a entspricht.

Wie aus Fig. 1a weiters ersichtlich, ist das Türoberteil 6a in der gezeigten Ausführung mittels einer Führungsschiene 9a verschieblich gelagert, welche an dem Türrahmen 3 angebracht ist.

In der gezeigten Ausführung ist das Türoberteil 6a zur Erhöhung der Stabilität mit einer zweiten Führungsschiene 9b verbunden, welche im Wesentlichen parallel zur Führungsschiene 9a verläuft. Die Führungsschienen 9a, 9b, mit welchen das Türoberteil 6a verschieblich gelagert ist, verlaufen unter einem Neigungswinkel zur Horizontalen. Das Türunterteil 6b ist mittels einer an dem Türrahmen 3 befestigten horizontalen Führungsschiene 10 verschieblich gelagert. Das Türoberteil 6a kann mit einer Antriebs- bzw. Federeinheit (nicht gezeigt) gekoppelt sein. In einer bevorzugten Ausführungsform wird das Türblatt 6 bei Freigabe durch den Benutzer (siehe unten) selbsttätig von der Schließstellung (vgl. Fig. 1a) in die Offenstellung (vgl. Fig. 1a) überführt, wobei der Schließvorgang umgekehrt durch den Benutzer händisch unterstützt wird.

Wie aus Fig. 1a, im Detail aus Fig. 1b, ersichtlich, ist eine Verriegelungsvorrichtung 11 zur Verriegelung des Türblatts 6 in der Schließstellung der Schiebetür 1 an dem Türrahmen 3 vorgesehen. In der gezeigten Ausführung ist zudem eine weitere Verriegelungsvorrichtung 12 zur Verriegelung des Türblatts 6 in der Offenstellung vorgesehen (vgl. Fig. 2c). Die Verriegelungsvorrichtung 11 weist ein Haken- bzw. Fangelement 13 auf, welches an einem Führungsschlitten 14 befestigt ist, der beim Öffnen der Schiebetür 1 entlang der Führungsschiene 9a verschieblich ist. An dem Führungsschlitten 14 ist zudem ein weiteres Haken- bzw. Fangelement 15 der weiteren Verriegelungsvorrichtung 12 vorgesehen. Das Fangelement 13 der Verriegelungsvorrichtung 11 ist in der Schließstellung der Schiebetür 1 mit einer Rasteinheit 16 verrastbar, welche ortsfest an dem Türrahmen 3 angebracht ist. Entsprechend ist eine weitere Rasteinheit 17 ortsfest am Türrahmen 3 angebracht. An der weiteren Rasteinheit 17 ist das weitere Fangelement 15 der weiteren Verriegelungsvorrichtung 12 in der Offenstellung der Schiebetür 1 verrastbar (vgl. Fig. 2c).

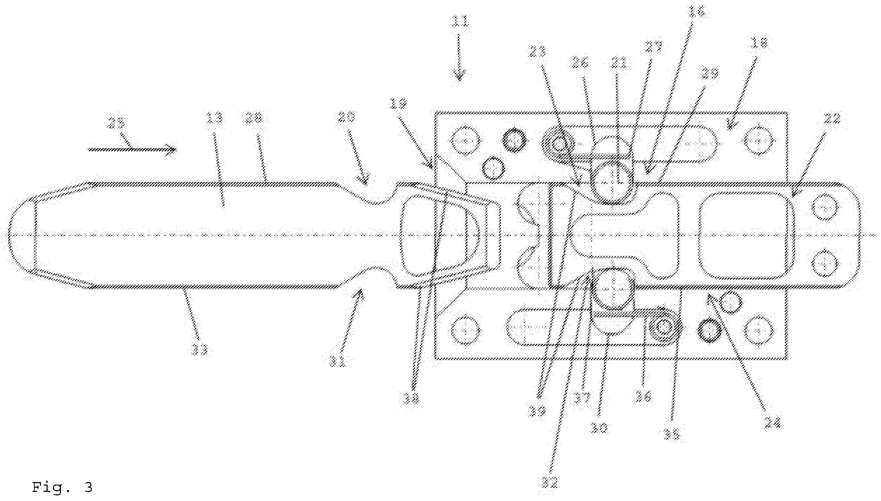

Die Funktion der Verriegelungsvorrichtung 11 ist im Detail aus den Fig. 3 bis 7 ersichtlich. Wenn nachstehend auf Merkmale der Verriegelungsvorrichtung 11 Bezug genommen wird, so kann stets eine entsprechende Ausgestaltung bei der weiteren Verriegelungsvorrichtung 12 vorgesehen sein.

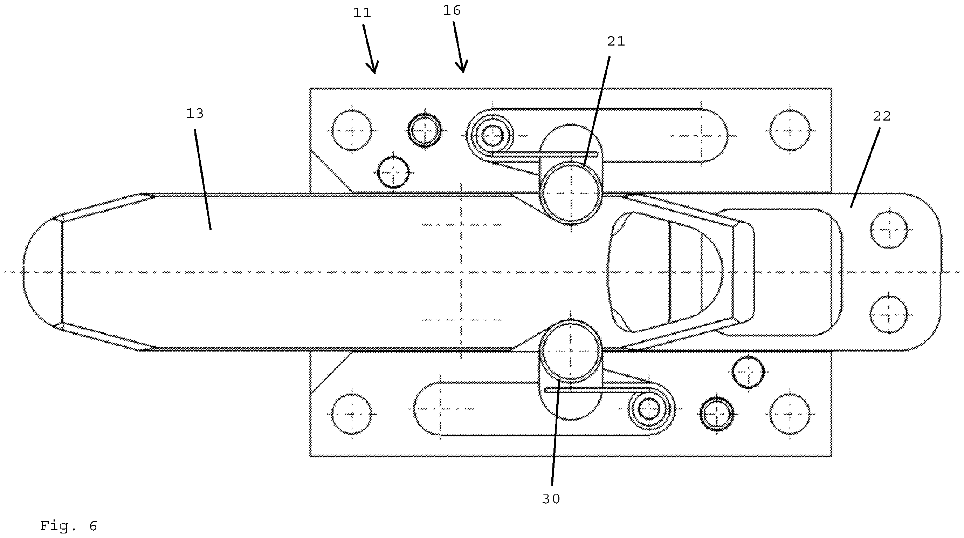

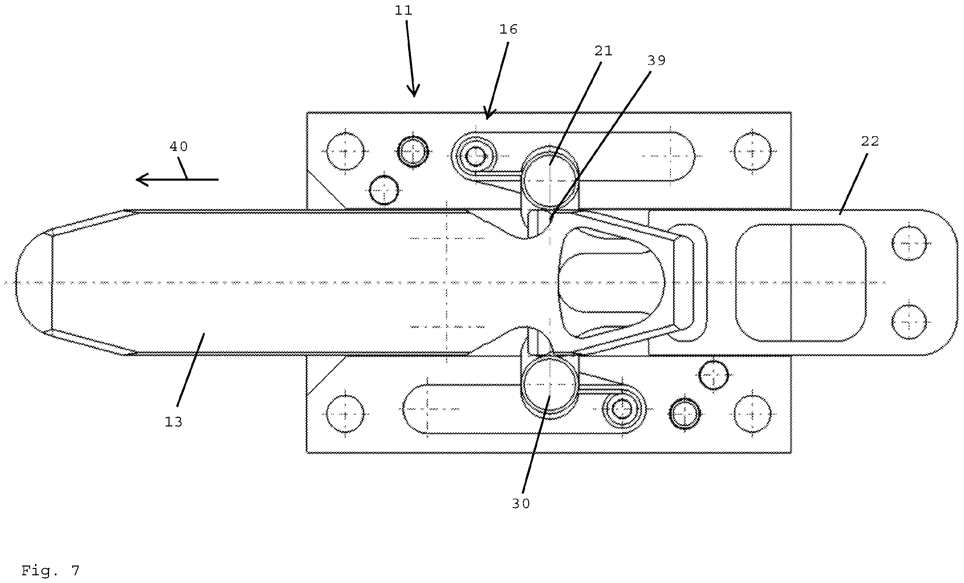

Wie aus Fig. 3 bis 7 ersichtlich, weist die Rasteinheit 16 ein Gehäuse 18 auf, an welchem eine Einschuböffnung 19 für das Fangelement 13 ausgebildet ist. Der besseren Übersicht halber ist in der Zeichnung nur eine von zwei Halbschalen des Gehäuses 18 dargestellt. Das Fangelement 13 weist eine Rastausnehmung 20 zur Verrastung mit einem ersten Rastkörper 21 der Rasteinheit 16 auf. Darüber hinaus weist die Rasteinheit 16 ein Auslöseelement 22 auf, an welchem eine erste Aufnahmeöffnung 23 zur Aufnahme des Rastkörpers ausgebildet ist. Das Auslöseelement 22 ist im verrasteten Zustand zwischen dem Fangelement 13 und der Rasteinheit 16 (vgl. Fig. 6) von einer den ersten Rastkörper 21 in der ersten Rastausnehmung 20 des Fangelements 13 und den ersten Rastkörper 21 in der ersten Aufnahmeöffnung 23 des Auslöseelements 22 anordnenden Ruheposition (vgl. Fig. 6) in eine die Verrastung zwischen dem ersten Rastkörper 21 und der ersten Rastausnehmung 20 des Fangelements 13 freigebende Auslöseposition (vgl. Fig. 7) beweglich.

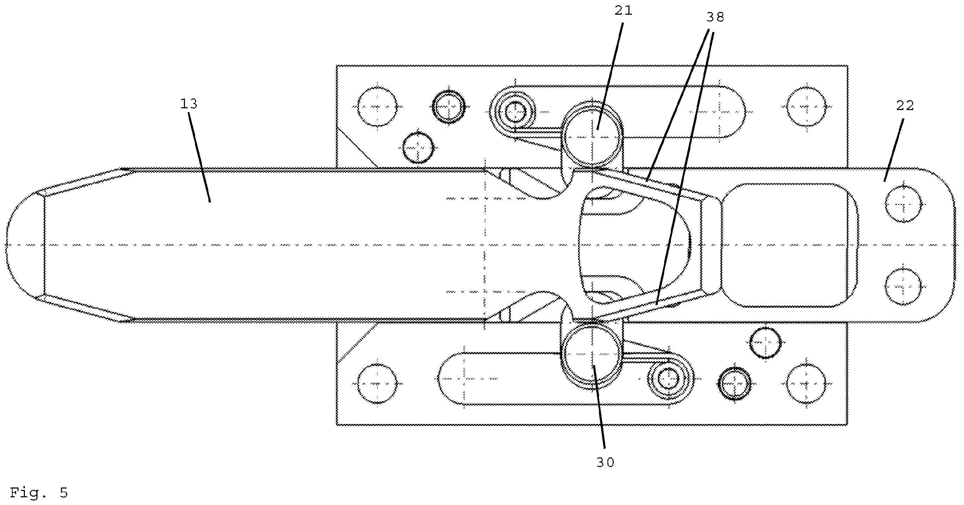

In der gezeigten Ausführung weist die Rasteinheit 16 eine erste Linearführung 24 zur verschieblichen Lagerung des Auslöseelements 22 zwischen der Ruheposition und der Auslöseposition auf. Die erste Linearführung 24 ist überdies dazu ausgebildet, das Fangelement 13 innerhalb der Rasteinheit 16 zu führen. Zu diesem Zweck ist die erste Linearführung 24 in Einschubrichtung des Fangelements 13 (vgl. Pfeil 25 in Fig. 3) erstreckt. Die Rasteinheit 16 weist zudem eine zweite Linearführung 26 in Form einer Langlochführung zur verschieblichen Lagerung des ersten Rastkörpers 21 zwischen einer mit der ersten Rastausnehmung 20 des Fangelements 13 verrasteten ersten Position (vgl. Fig. 6) und einer das Fangelement 13 freigebenden zweiten Position (vgl. Fig. 5, 7) auf. Die zweite Linearführung 26 erstreckt sich in der gezeigten Ausführung im Wesentlichen senkrecht zur ersten Linearführung 24. Die Rasteinheit 16 weist zudem ein erstes Federelement 27 auf, so dass der erste Rastkörper 21 gegen die Federkraft des ersten Federelements 27 von der mit der ersten Rastausnehmung 20 des Fangelements 13 verrasteten ersten Position (vgl. Fig. 6) in die das Fangelement 13 freigebende zweite Position (vgl. Fig. 5, 7) verschieblich ist.

In der gezeigten Ausführung ist das Fangelement 13 als längliches Flachteil ausgebildet, wobei die erste Rastausnehmung 20 in Form einer Kerbe an einem ersten Längsrand 28 des länglichen Flachteils vorgesehen ist. Darüber hinaus ist das Auslöseelement 22 in der gezeigten Ausführung als langgestrecktes Flachstück ausgebildet. Die erste Aufnahmeöffnung 23 ist in Form einer Kerbe an einem ersten Längsrand 29 des langgestreckten Flachstücks vorgesehen.

In der gezeigten Ausführung weist die Rasteinheit 16 einen zweiten Rastkörper 30 zur Verrastung mit einer zweiten Rastausnehmung 31 des Fangelements 13 und zur Aufnahme in einer zweiten Aufnahmeöffnung 32 des Auslöseelements 22 auf. Die zweite Rastausnehmung 31 des Fangelements 13 ist an einem zweiten Längsrand 33 des Fangelements 13 und die zweite Aufnahmeöffnung 32 des Auslöseelements 22 an einem zweiten Längsrand 35 des Auslöseelements vorgesehen.

Als erster Rastkörper 21 und als zweiter Rastkörper 30 ist jeweils ein Zylinderelement vorgesehen. Der zweite Rastkörper 30 ist in derselben Art und Weise an der Rasteinheit 16 gelagert wie der erste Rastkörper 21. Demnach ist insbesondere ein zweites Federelement 36 vorgesehen, welches den zweiten Rastkörper 30 in Richtung der ersten Position drückt. Der zweite Rastkörper 30 ist hierbei entlang einer dritten Längsführung 37 in Form einer Langlochführung verschieblich, welche sich im Wesentlichen senkrecht zur ersten Linearführung 24 der Rasteinheit 16 erstreckt.

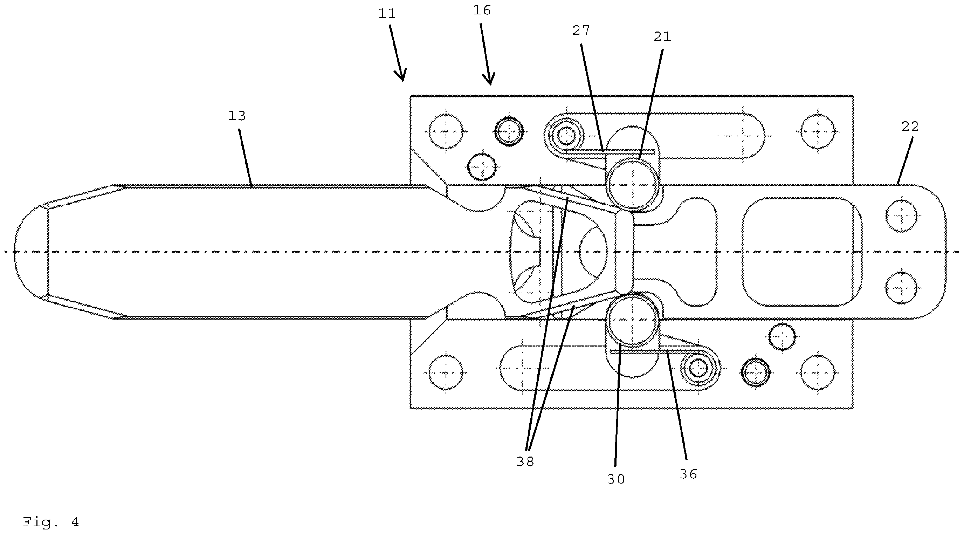

Die Funktion der Verriegelungsvorrichtung 1 beim Schließen der Schiebetür 1 geht aus dem Ablauf gemäß den Fig. 3 bis 6 hervor. Zunächst wird das Fangelement 13 zusammen mit dem von der Offenin die Schließstellung bewegten Türblatt 6 in Richtung der Rasteinheit 16 verschoben, bis das Fangelement 13 durch die längliche Eintrittsöffnung 19 in die Rasteinheit 16 eintritt (vgl. Fig. 3). Durch weiteren Vorschub des Fangelements 13 trifft ein vorderer Endbereich des Fangelements 13 auf den ersten Rastkörper 21 und den zweiten Rastkörper 30 (vgl. Fig. 4). Das Fangelement 13 weist am vorderen Endbereich zwei zur Einschubrichtung 25 nach hinten ansteigende Auflaufflächen 38 auf, welche den ersten Rastkörper 21 und den zweiten Rastkörper 30 gegen Federkraft nach außen in deren zweite Positionen drücken (vgl. Fig. 5), bis der erste Rastkörper 21 in die erste Rastausnehmung 20 und der zweite Rastkörper 31 in die zweite Rastausnehmung 31 des Fangelements 13 einschnappen. Zugleich sind der erste Rastkörper 21 in der ersten Aufnahmeöffnung 23 und der zweite Rastkörper 30 in der zweiten Aufnahmeöffnung 32 des Auslöseelements 22 angeordnet. Damit liegen das Fangelement 13 und der erste 21 bzw. zweite Rastkörper 30 im verrasteten Zustand vor. Das Auslöseelement 22 ist im Ruhezustand angeordnet, in dem das Auslöseelement 22 keinen Einfluss auf die Verrastung zwischen dem Fangelement 13 und dem ersten 21 bzw. zweiten Rastkörper 30 nimmt.

Zum Öffnen der Tür wird das Auslöseelement 22 über einen damit gekoppelten Handgriff (nicht gezeigt) derart verschoben, dass Betätigungsflächen 39 des Auslöseelements 22 (vgl. Fig. 7) den Rasteingriff zwischen dem Fangelement 13 und dem ersten 21 bzw. zweiten Rastkörper 30 lösen. Dadurch kann das Fangelement 13 entgegen der Einschubrichtung 25, d.h. in Auszugsrichtung 40, von der Rasteinheit 16 entfernt werden.

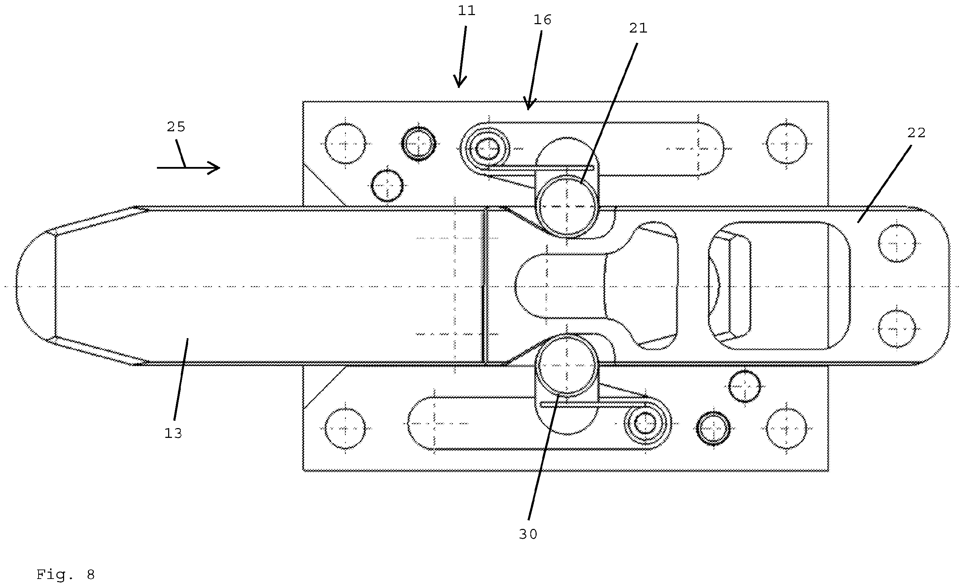

Bei der Ausführungsform gemäß Fig. 8 kann die Entriegelung durch eine Zugkraft am Auslöseelement 22 in Einschubrichtung 25 des Fangelements 13 vorgenommen werden.

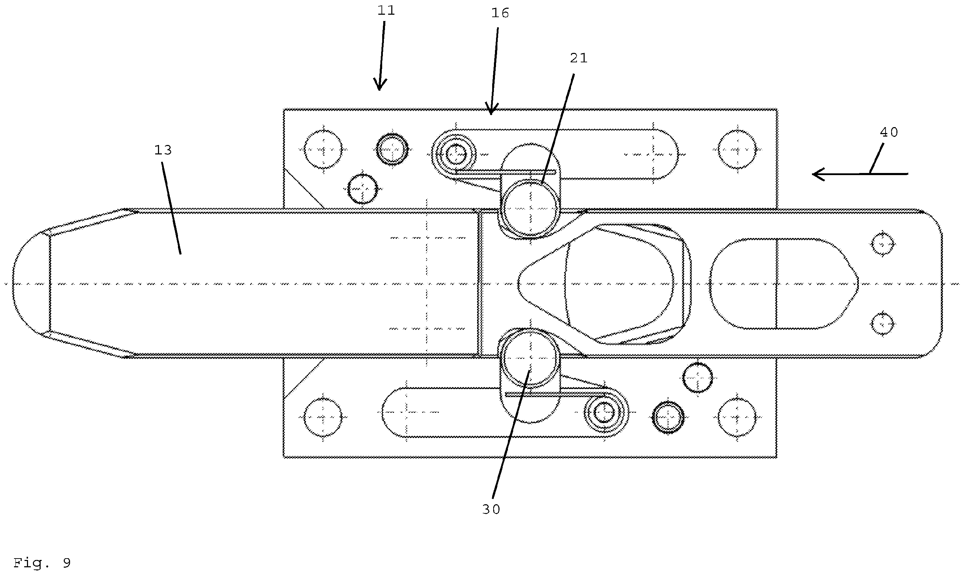

Demgegenüber kann bei der Ausführungsform der Fig. 9 die Entriegelung der Verriegelungsvorrichtung 11 dadurch vorgenommen werden, dass das Auslöseelement 22 entgegen der Einschubrichtung 25, also in Auszugsrichtung 40, des Fangelements 13 gedrückt wird.

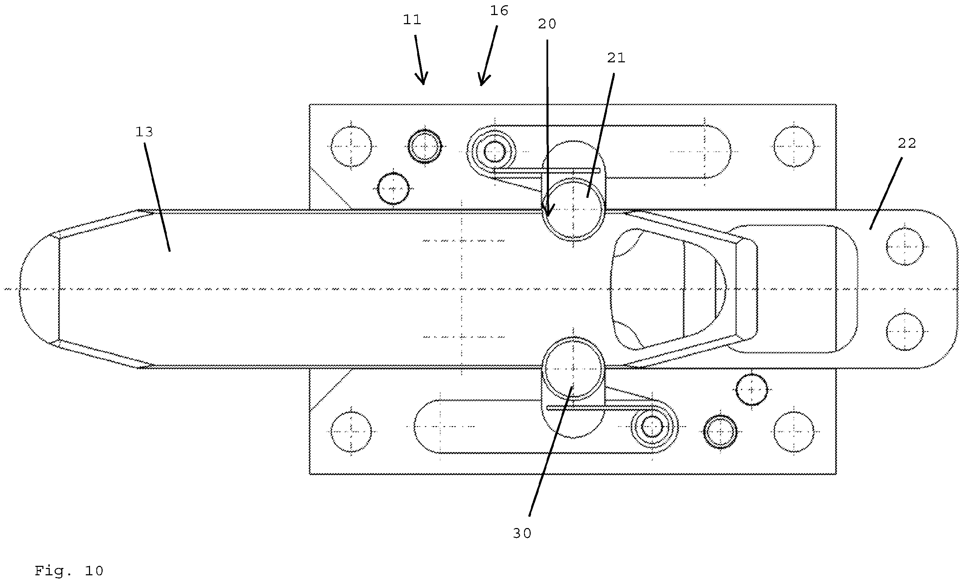

Die Ausführungsformen der Fig. 10, 11 und 12 bzw. 13 unterscheiden sich durch die verbleibende Beweglichkeit des Fangelements 13 im verrasteten Zustand an der Rasteinheit 16.

Gemäß Fig. 10 ist das Fangelement 13 im verrasteten Zustand unbeweglich an der Rasteinheit 16 angeordnet. Zu diesem Zweck entspricht die Breite (hier der Durchmesser) des ersten Rastkörpers 21 im Wesentlichen genau der Breite der ersten Rastausnehmung 20 des Fangelements 13. Dasselbe gilt für den zweiten Rastkörper 30 und die zweite Rastausnehmung 31 des Fangelements 13.

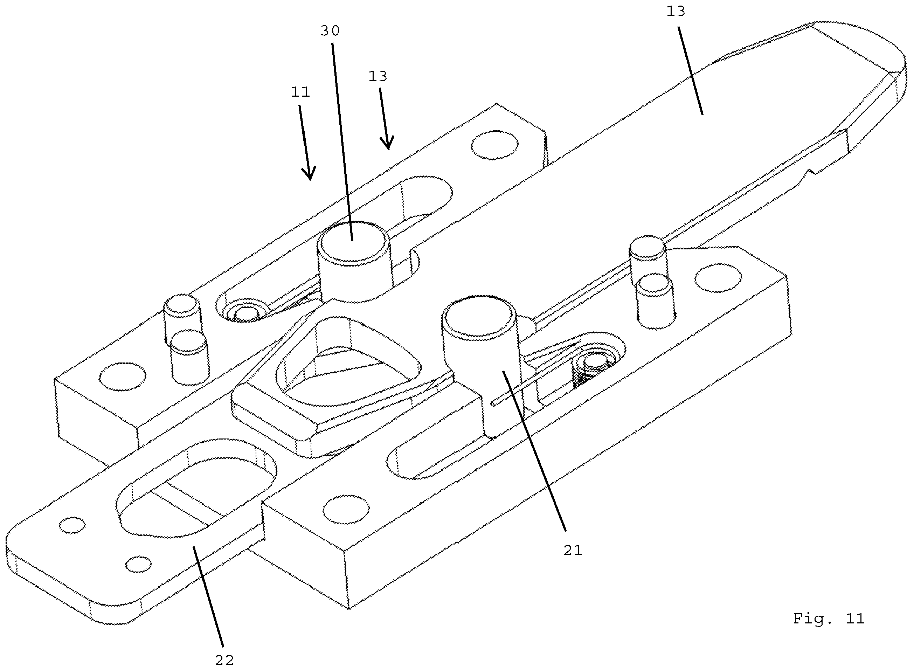

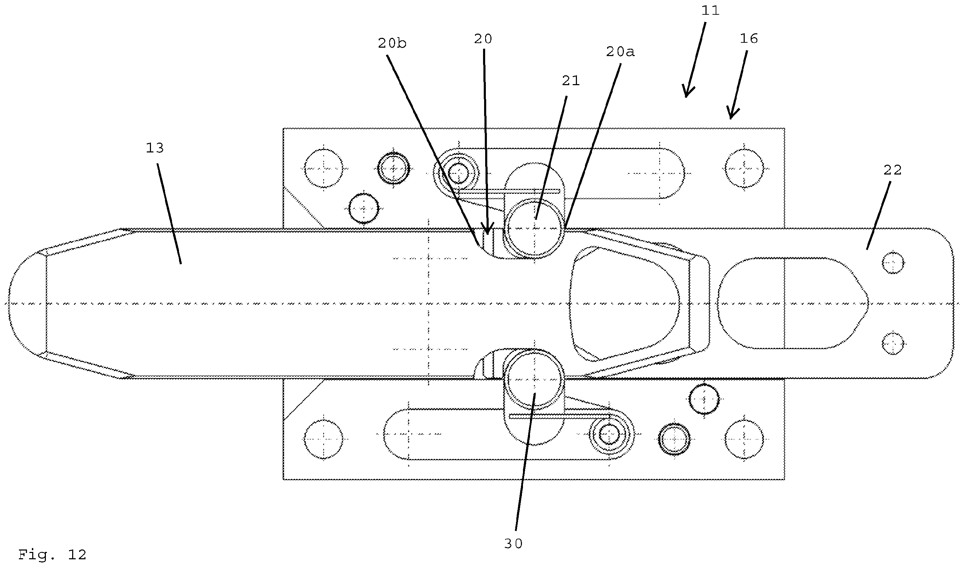

Gemäß Fig. 11, 12 ist das Fangelement 13 im verrasteten Zustand über eine definierte Strecke verschieblich an der Rasteinheit 16 angeordnet. Zu diesem Zweck weist der erste Rastkörper 21 eine geringer Breite als die erste Rastausnehmung 20 des Fangelements auf. Demnach weist die erste Rastausnehmung 20 des Fangelements 13 am (in Einschubrichtung 25 gesehen) vorderen Ende eine erste Sperrfläche 20a und am hinteren Ende eine zweite Sperrfläche 20b auf. Im Kontaktzustand zwischen dem ersten Rastkörper 21 und der ersten Sperrfläche 20a ist eine Verschiebung des Fangelements 13 in Auszugsrichtung 40 blockiert. Entsprechend ist im Kontaktzustand zwischen dem ersten Rastkörper 21 und der zweiten Sperrfläche 20b eine Verschiebung des Fangelements 13 in Einschubrichtung 25 blockiert. Dasselbe gilt für den zweiten Rastkörper 30 und die zweite Rastausnehmung 31 des Fangelements 13.

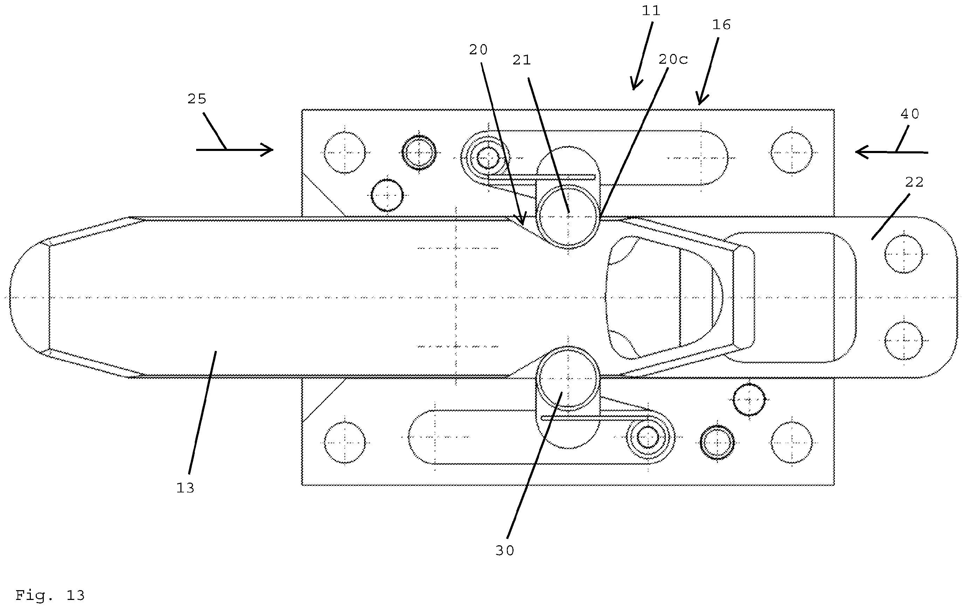

Gemäß Fig. 13 ist das Fangelement 13 im verrasteten Zustand in Auszugsrichtung 40 des Fangelements 13 unverschieblich, aber in Einschubrichtung 25 des Fangelements 13 verschieblich an der Rasteinheit 16 angeordnet. Zu diesem Zweck weist die Rastausnehmung 20 am (in Einschubrichtung 25 gesehen) vorderen Ende eine die Bewegung des Fangelements 13 in Auszugsrichtung 40 sperrende Haltefläche 20c auf. Am hinteren Ende der Rastausnehmung 20 ist eine Auflauffläche 20d vorgesehen, welche flacher als die Haltefläche 20c ist. Dadurch wird eine weitere Verschiebung des Fangelements 13 im verrasteten Zustand in Einschubrichtung 25 des Fangelements 13 freigegeben. Bei dieser Ausführung ist ein Anschlagelement außerhalb der Rasteinheit 16 ausgebildet, um die Endposition des Fangelements 13 bei der Verschiebung in Einschubrichtung 25 festzulegen.

## Patentansprüche

1. Verriegelungsvorrichtung (11) zur Verriegelung eines ersten Bauteils, insbesondere eines Türblatts (6), an einem zweiten Bauteil, insbesondere an einem Türrahmen (3), mit einem Fangelement (13) zur Befestigung am ersten oder zweiten Bauteil, wobei das Fangelement (13) eine erste Rastausnehmung (20) aufweist,
mit einer Rasteinheit (16) zur Befestigung am zweiten bzw. ersten Bauteil, wobei die Rasteinheit (16) einen ersten Rastkörper (21) zur Verrastung mit der zumindest einen Rastausnehmung (20) des Fangelements (13) aufweist, wobei die Rasteinheit (16) ein Auslöseelement (22) aufweist, welches eine erste Aufnahmeöffnung (23) zur Aufnahme des ersten Rastkörpers (21) aufweist, wobei das Auslöseelement (22) zwischen einer den ersten Rastkörper (21) in der ersten Rastausnehmung (20) des Fangelements (13) und in der Aufnahmeöffnung (23) des Auslöseelements (22) anordnenden Ruheposition und einer die Verrastung zwischen dem ersten Rastkörper (21) und der ersten Rastausnehmung (20) des Fangelements (13) lösenden Auslöseposition beweglich ist,
**dadurch gekennzeichnet, dass** das Fangelement (13) als längliches Flachteil ausgebildet ist und die erste Rastausnehmung (20) an einem ersten Längsrand (28) des länglichen Flachteils (13) vorgesehen ist.

2. Verriegelungsvorrichtung (11) nach Anspruch 1, **dadurch gekennzeichnet, dass** die Rasteinheit (16) eine erste Linearführung (24) zur verschieblichen Lagerung des Auslöseelements (22) zwischen der Ruheposition und der Auslöseposition aufweist.

3. Verriegelungsvorrichtung (11) nach Anspruch 1 oder 2, **dadurch gekennzeichnet, dass** die Rasteinheit (16) eine zweite Linearführung (26) zur verschieblichen Lagerung des ersten Rastkörpers (21) zwischen einer mit der ersten Rastausnehmung (20) des Fangelements (13) verrasteten ersten Position und einer das Fangelement (13) freigebenden zweiten Position aufweist, wobei sich die zweite Linearführung (26) vorzugsweise im Wesentlichen senkrecht zur ersten Linearführung (24) erstreckt.

4. Verriegelungsvorrichtung (11) nach Anspruch 3, **dadurch gekennzeichnet, dass** die Rasteinheit (16) ein erstes Federelement (27) aufweist, wobei der erste Rastkörper (21) gegen die Federkraft des ersten Federelements (27) von der mit der ersten Rastausnehmung (10) des Fangelements (13) verrasteten ersten Position in die das Fangelement (13) freigebende zweite Position verschieblich ist.

5. Verriegelungsvorrichtung (11) nach einem der Ansprüche 1 bis 4, **dadurch gekennzeichnet, dass** das Auslöseelement (22) als langgestrecktes Flachstück ausgebildet ist, wobei die erste Aufnahmeöffnung (23) an einem ersten Längsrand (29) des langgestreckten Flachstücks vorgesehen ist.

6. Verriegelungsvorrichtung (11) nach einem der Ansprüche 1 bis 5, **dadurch gekennzeichnet, dass** die Rasteinheit (16) einen zweiten Rastkörper (30) zur Verrastung mit einer zweiten Rastausnehmung (31) des Fangelements (13) und zur Aufnahme in einer zweiten Aufnahmeöffnung (32) des Auslöseelements (22) aufweist, wobei die zweite Rastausnehmung (31) des Fangelements (13) an einem zweiten Längsrand (33) des Fangelements (13) und die zweite Aufnahmeöffnung (32) des Auslöseelements (22) an einem zweiten Längsrand (35) des Auslöseelements (22) vorgesehen ist.

7. Verriegelungsvorrichtung (11) nach einem der Ansprüche 1 bis 6, **dadurch gekennzeichnet, dass** das Fangelement (13) im verrasteten Zustand zwischen dem ersten Rastkörper (21) und der ersten Rastausnehmung (20) des Fangelements (13) im Wesentlichen unbeweglich an der Rasteinheit fixiert ist.

8. Verriegelungsvorrichtung (11) nach einem der Ansprüche 1 bis 6, **dadurch gekennzeichnet, dass** die erste Rastausnehmung (20) des Fangelements (13) eine erste Sperrfläche (20a) und eine zweite Sperrfläche (20b) derart aufweist, dass das Fangelement (13) im verrasteten Zustand zwischen dem ersten Rastkörper (21) und der ersten Rastausnehmung (20) des Fangelements (13) über eine definierte Strecke beweglich an der Rasteinheit (16) angeordnet ist.

9. Verriegelungsvorrichtung (11) nach einem der Ansprüche 1 bis 8, **dadurch gekennzeichnet, dass** das Fangelement (13) im verrasteten Zustand zwischen dem ersten Rastkörper (21) und der ersten Rastausnehmung (20) des Fangelements (13) in die eine Richtung verschieblich an der Rasteinheit (16) und in die andere Richtung im Wesentlichen unverschieblich an der Rasteinheit (16) angeordnet ist.

10. Verriegelungsvorrichtung (11) nach einem der Ansprüche 1 bis 9, **dadurch gekennzeichnet, dass** als erster (21) und/oder zweiter Rastkörper (30) ein Zylinderelement vorgesehen ist bzw. sind.

11. Schiebetür (1), insbesondere für ein Flugzeug, mit einem Türrahmen (3), mit einem zwischen einer Offenstellung und einer Schließstellung gegenüber dem Türrahmen (3) verschieblichen Türblatt (6) und mit einer Verriegelungsvorrichtung (11) zur Verriegelung des Türblatts (6) an dem Türrahmen (3), **dadurch gekennzeichnet, dass** die Verriegelungsvorrichtung (11) nach einem der Ansprüche 1 bis 10 ausgebildet ist.

12. Schiebetür (1) nach Anspruch 11, **dadurch gekennzeichnet, dass** die Verriegelungsvorrichtung (11) zur Verriegelung des Türblatts (61) in der Schließstellung ausgebildet ist, wobei eine weitere Verriegelungsvorrichtung (13) nach einem der Ansprüche 1 bis 11 zur Verriegelung des Türblatts (6) in der Offenstellung vorgesehen ist.

13. Schiebetür (1) nach Anspruch 11 oder 12, **dadurch gekennzeichnet, dass** das Türblatt (6) ein Türoberteil (6a) und ein Türunterteil (6b) aufweist, die in der Schließstellung des Türblatts (6) in einer ausgezogenen Position und in der Offenstellung in einer zusammengeschobenen Stauposition angeordnet sind.

14. Schiebetür (1) nach Anspruch 13, **dadurch gekennzeichnet, dass** der Türrahmen (3) eine in einem Neigungswinkel zur Horizontalen verlaufende Führungsschiene (9) zur verschieblichen Lagerung des Türblatts (6) aufweist, so dass die Verschiebung des Türblatts (6) zwischen der Schließ- und der Offenstellung in eine Verschiebung des Türoberteils (6a) und des Türunterteils (6b) gegeneinander zwischen der ausgezogenen Position und der zusammengeschobenen Stauposition umsetzbar ist.

## Claims

1. A locking device (11) for locking a first component, in particular a door leaf (6), to a second component, in particular to a door frame (3), with a catch element (13) for fastening to the first or second component, wherein the catch element (13) comprises a first latching recess (20), with a latching unit (16) for fastening to the second or first component, wherein the latching unit (16) comprises a first latching body (21) for engagement with the at least one latching recess (20) of the catch element (13), **characterized in that** the latching unit (16) comprises a release element (22), which comprises a first receiving opening (23) for receiving the first latching body (21), wherein the release element (22) can be moved between a resting position, which arranges the first latching body (21) in the first latching recess (20) of the catch element (13) and in the receiving opening (23) of the release element (22), and a release position, which releases the engagement between the first latching body (21) and the first latching recess (20) of the catch element (13), wherein the catch element (13) is designed as an oblong flat part, and the first latching recess (20) is provided on a first longitudinal edge (28) of the oblong flat part (13).

2. The locking device (11) according to claim 1, **characterized in that** the latching unit (16) comprises a first linear guide (24) for displaceably mounting the release element (22) between the resting position and release position.

3. The locking device (11) according to claim 1 or 2, **characterized in that** the latching unit (16) comprises a second linear guide (26) for displaceably mounting the first latching body (21) between a first position engaged with the first latching recess (20) of the catch element (13) and a second position that releases the catch element (13), wherein the second linear guide (26) preferably extends essentially perpendicularly to the first linear guide (24).

4. The locking device (11) according to claim 3, **characterized in that** the latching unit (16) comprises a first spring element (27), wherein the first latching body (21) can be displaced against the spring force exerted by the first spring element (17) from the first position engaged with the first latching recess (10) of the catch element (13) into the second position that releases the catch element (13).

5. The locking device (11) according to one of claims 1 to 4, **characterized in that** the release element (22) is designed as an oblong flat piece, wherein the first receiving opening (23) is provided on a first longitudinal edge (29) of the oblong flat piece.

6. The locking device (11) according to one of claims 1 to 5, **characterized in that** the latching unit (16) comprises a second latching body (30) for engagement with a second latching recess (31) of the catch element (13) and for receiving in a second receiving opening (32) of the release element (22), wherein the second latching recess (31) of the catch element (13) is provided on a second longitudinal edge (33) of the catch element (13) and the second receiving opening (32) of the release element (22) is provided on a second longitudinal edge (35) of the release element.

7. The locking device (11) according to one of claims 1 to 6, **characterized in that** the catch element (13) in the engaged state is essentially immovably fixed on the latching unit between the first latching body (21) and the first latching recess (20) of the catch element (13).

8. The locking device (11) according to one of claims 1 to 6, **characterized in that** the first latching recess (20) of the catch element (13) comprises a first locking surface (20a) and a second locking surface (20b), such that the catch element (13) in the engaged state between the first latching body (21) and first latching recess (20) of the catch element (13) is arranged on the latching unit (16) so that it can be moved over a defined stretch.

9. The locking device (11) according to one of claims 1 to 8, **characterized in that** the catch element (13) in the engaged state between the first latching body (21) and the first latching recess (20) of the catch element (13) is arranged displaceably on the latching unit (16) in the one direction, and essentially immovably on the latching unit (16) in the other direction.

10. The locking device (11) according to one of claims 1 to 9, **characterized in that** a cylinder element is provided as the first (21) and/or second latching body (30).

11. A sliding door (1), in particular for an aircraft, with a door frame (3), with a door leaf (6) that can be displaced between an open position and a closed position relative to the door frame (3), and with a locking device (11) for locking the door leaf (6) to the door frame (3), **characterized in that** the locking device (11) is designed according to one of claims 1 to 10.

12. The sliding door (1) according to claim 11, **characterized in that** the locking device (11) is designed for locking the door leaf (61) in the closed position, wherein an additional locking device (13) according to one of claims 1 to 11 is provided for locking the door leaf (6) in the open position.

13. The sliding door (1) according to claim 11 or 12, **characterized in that** the door leaf (6) comprises an upper door part (6a) and a lower door part (6b), which are arranged in an extended position in the closed position of the door leaf (6), and in a pushed together stowage position in the open position.

14. The sliding door (1) according to claim 13, **characterized in that** the door frame (6) comprises a guide rail (9) that runs at an angle of inclination to the horizontal for displaceably mounting the door leaf (6), so that the displacement of the door leaf (6) between the closed and open position can be converted into a displacement of the upper door part (6a) and lower door part (6b) opposite each other between the extended position and the pushed together stowage position.

## Revendications

1. Dispositif de verrouillage (11) pour le verrouillage d'un premier composant, plus particulièrement d'un battant de porte (6), sur un deuxième composant, plus particulièrement sur un cadre de porte (3), avec un élément d'arrêt (13) pour la fixation au premier ou au deuxième composant, dans lequel l'élément d'arrêt (13) comprend un premier évidement d'encliquetage (20), avec une unité d'encliquetage (16) pour la fixation au deuxième resp. au premier composant, dans lequel l'unité d'encliquetage (16) comprend un premier corps d'encliquetage (21) pour l'encliquetage avec l'au moins un évidement d'encliquetage (20) de l'élément d'arrêt (13), dans lequel l'unité d'encliquetage (16) comprend un élément de déclenchement (22) qui comprend une première ouverture de logement (23) pour le logement du premier corps d'encliquetage (21), dans lequel l'élément de déclenchement (22) est mobile entre une position de repos disposant le premier corps d'encliquetage (21) dans le premier évidement d'encliquetage (20) de l'élément d'arrêt (13) et dans l'ouverture de logement (23) de l'élément de déclenchement (22) et une position de déclenchement détachant l'encliquetage entre le premier corps d'encliquetage (21) et le premier évidement d'encliquetage (20) de l'élément d'arrêt (13), **caractérisé en ce que** l'élément d'arrêt (13) est conçu comme une pièce plate allongée et le premier évidement d'encliquetage (20) est prévu sur un premier bord longitudinal (28) de la pièce plate allongée (13).

2. Dispositif de verrouillage (11) selon la revendication 1, **caractérisé en ce que** l'unité d'encliquetage (16) comprend un premier guidage linéaire (24) pour le logement coulissant de l'élément de déclenchement (22) entre la position de repos et la position de déclenchement.

3. Dispositif de verrouillage (11) selon la revendication 1 ou 2, **caractérisé en ce que** l'unité d'encliquetage (16) comprend un deuxième guidage linéaire (26) pour le logement coulissant du premier corps d'encliquetage (21) entre une première position encliquetée avec le premier évidement d'encliquetage (20) de l'élément d'arrêt (13) et une deuxième position libérant l'élément d'arrêt (13), dans lequel le deuxième guidage linéaire (26) s'étend de préférence globalement perpendiculairement au premier guidage linéaire (24).

4. Dispositif de verrouillage (11) selon la revendication 3, **caractérisé en ce que** l'unité d'encliquetage (16) comprend un premier élément à ressort (27), dans lequel le premier corps d'encliquetage (21) peut coulisser, contre la force élastique du premier élément à ressort (27), de la première position encliquetée avec le premier évidement d'encliquetage (10) de l'élément d'arrêt (13) vers la deuxième position libérant l'élément d'arrêt (13).

5. Dispositif de verrouillage (11) selon l'une des revendications 1 à 4, **caractérisé en ce que** l'élément de déclenchement (22) est conçu comme une pièce plate étirée, dans lequel la première ouverture de logement (23) est prévue sur un premier bord longitudinal (29) de la pièce plate étirée.

6. Dispositif de verrouillage (11) selon l'une des revendications 1 à 5, **caractérisé en ce que** l'unité d'encliquetage (16) comprend un deuxième corps d'encliquetage (30) pour l'encliquetage avec un deuxième évidement d'encliquetage (31) de l'élément d'arrêt (13) et pour le logement dans une deuxième ouverture de logement (32) de l'élément de déclenchement (22), dans lequel le deuxième évidement d'encliquetage (31) de l'élément d'arrêt (13) est prévu sur un deuxième bord longitudinal (33) de l'élément d'arrêt (13) et la deuxième ouverture de logement (32) de l'élément de déclenchement (22) est prévue sur un deuxième bord longitudinal (35) de l'élément de déclenchement (22).

7. Dispositif de verrouillage (11) selon l'une des revendications 1 à 6, **caractérisé en ce que** l'élément d'arrêt (13) est fixé, dans l'état encliqueté, entre le premier corps d'encliquetage (21) et le premier évidement d'encliquetage (20) de l'élément d'arrêt (13), de manière globalement immobile à l'unité d'encliquetage.

8. Dispositif de verrouillage (11) selon l'une des revendications 1 à 6, **caractérisé en ce que** le premier évidement d'encliquetage (20) de l'élément d'arrêt (13) comprend une première surface de blocage (20a) et une deuxième surface de blocage (20b) de façon à ce que l'élément d'arrêt (13) soit disposé, dans l'état encliqueté, entre le premier corps d'encliquetage (21) et le premier évidement d'encliquetage (20) de l'élément d'arrêt (13), de manière mobile sur une trajectoire définie sur l'unité d'encliquetage (16).

9. Dispositif de verrouillage (11) selon l'une des revendications 1 à 8, **caractérisé en ce que** l'élément d'arrêt (13) est disposé, dans l'état encliqueté, entre le premier corps d'encliquetage (21) et le premier évidement d'encliquetage (20) de l'élément d'arrêt (13), de manière coulissante dans une direction sur l'unité d'encliquetage (16) et de manière globalement non coulissante dans l'autre direction sur l'unité d'encliquetage (16).

10. Dispositif de verrouillage (11) selon l'une des revendications 1 à 9, **caractérisé en ce que**, en tant que premier (21) et/ou deuxième corps d'encliquetage (30), est prévu un élément cylindrique.

11. Porte coulissante (1), plus particulièrement pour un avion, avec un cadre de porte (3), avec un battant de porte (6) coulissant, par rapport au cadre de porte (3), entre une position ouverte et une position fermée et avec un dispositif de verrouillage (11) pour le verrouillage du battant de porte (6) au cadre de porte (3), **caractérisé en ce que** le dispositif de verrouillage (11) est conçu selon l'une des revendications 1 à 10.

12. Porte coulissante (1) selon la revendication 11, **caractérisée en ce que** le dispositif de verrouillage (11) est conçu pour le verrouillage du battant de porte (61) dans la position fermée, dans lequel un autre dispositif de verrouillage (13) selon l'une des revendications 1 à 11 est prévu pour le verrouillage du battant de porte (6) dans la position ouverte.

13. Porte coulissante (1) selon la revendication 11 ou 12, **caractérisée en ce que** le battant de porte (6) comprend une partie supérieure de porte (6a) et une partie inférieure de porte (6b), qui sont disposées, dans la position fermée du battant de porte (6), dans une position sortie et, dans la position ouverte, dans une position de rangement rétractée.

14. Porte coulissante (1) selon la revendication 13, **caractérisée en ce que** le cadre de porte (3) comprend un rail de guidage (9) s'étendant avec un angle d'inclinaison par rapport à l'horizontale pour le logement coulissant du battant de porte (6), de façon à ce que le coulissement du battant de porte (6) entre la position fermée et la position ouverte puisse être convertie en un coulissement de la partie supérieure de porte (6a) et de la partie inférieure de porte (6b) l'une contre l'autre entre la position sortie et la position de rangement rétractée.
